# EUROPEAN PATENT SPECIFICATION

(11) **EP 1 738 675 B1**
(45) Date of publication and mention of the grant of the patent: **29.04.2009**
(21) Application number: 05728984.5
(22) Date of filing: 21.03.2005
(51) Int. Cl.: A47J 27/21, A47J 31/54, A47J 31/30

(54) **A BEVERAGE-BOILING KETTLE, AN ELECTRICAL HEATING KETTLE AND A BEVERAGE-BOILING CORDLESS ELECTRICAL HEATING KETTLE**
KESSEL ZUM KOCHEN EINES GETRÄNKS, ELEKTRISCHER HEIZKESSEL UND SCHNURLOSER ELEKTRISCHER HEIZKESSEL ZUM KOCHEN EINES GETRÄNKS
BOUILLOIRE, BOUILLOIRE ELECTRIQUE ET BOUILLOIRE ELECTRIQUE SANS FIL

(30) Priority: 19.04.2004 CN 200410026884
(43) Date of publication of application: 03.01.2007
(73) Proprietor: Shao, Zhicheng, Shunde, Guangdong 528314 (CN)
(72) Inventor: Shao, Zhicheng, Shunde, Guangdong 528314 (CN)
(74) Representative: Hammel, Frank A.
(86) International application number: PCT/CN2005/000357
(87) International publication number: WO 2005/102124

(56) References cited:
- EP-A1- 0 838 186
- CN-A- 1 483 374
- DE-A1- 19 914 651
- US-A- 1 774 927
- US-A- 5 046 409
- US-A- 5 067 396

## Description

### Background of the Present Invention

### Field of Invention

This Invention relates to a kettle for Beverage, an Electric Water Kettle and a Cableless Electric Kettle for Beverage.

### Description of Related Arts

The Documentation of CN Patent No. 031268358 under the title of Kettle for Beverage, Electric Water Kettle and Cableless Electric Water Kettle and the US Patent No. 17749127A disclose a kind of kettles for beverage. Such kettles have a kettle body, comprising an inner vessel being on the bottom of its kettle body; a funnel is provided at the top opening of the inner vessel and the funnel contains two separate filtering layers: An upper filtering layer and a lower filtering layer. Such an upper filtering layer is set up on a lid covering the top opening of the inner vessel. The opening of the kettle body is covered with another separate lid or hinged top. On operation, the kettle is heated from its bottom side. The Boiling water in the inner vessel flies out through the upper and lower filtering layers from the lower port of the funnel. With tea-leaf or coffee powder placed between these two filtering layers, this water will become delicious tea or coffee. The extracted liquid passes the inner surface of the lid of the kettle body and drips down in the reservoir between the kettle body and the inner vessel. The shortcoming is as follows: there is a lid on top of the inner vessel covering the inner vessel only, while there is also a lid on top of the kettle body. When the water in the inner vessel is boiling, the vapor and water generated in the inner vessel fly out through the top port of the funnel. This may not only go through the lid of the inner vessel, but also reach onto the lid of the kettle body. In case of tea or coffee, the inner side of the lid of the kettle body would be full with tea or coffee stains. The surface of both lids will be very hot which makes it difficult to open the lid of the kettle body as well as the lid of the inner vessel. The user has to wait until the material has cooled down to an acceptable temperature. In addition, it is necessary to open two lids and this is inconvenient for its operation. Besides, on opening the lid of the inner vessel, it is necessary for the user to touch the outer surface of the lid of the inner vessel and to contaminate it so that a sanitary problem due to the contamination on the surface of the lid may arise.

### Summary of the Present Invention

The aim of this Invention is to provide a kettle for beverage that is easy to open its lid.

In order to realize this aim of the Invention, the kettle for beverage contains a kettle body in which there is on its bottom an inner vessel provided with a funnel at its upper opening and the funnel contains two separate filtering layers: an upper filtering layer and a lower filtering layer; there is on that said inner vessel a cap covering the opening of the kettle body and having a pipe from the cavity of the inner vessel directly to the space between the said kettle body and the inner vessel.

The invention relates also toelectric kettles for beverage containing an electric heater. In the kettle body equipped with an electric heater there is an inner vessel on the bottom provided with a funnel at its upper opening and the funnel contains two separate filtering layers: an upper filtering layer and a lower filtering layer; there is on that said inner vessel a cap covering the opening of the kettle body and having a pipe from the cavity of the inner vessel directly to the space between the said kettle body and the inner vessel.
The invention relates as well to cableless electric kettles for beverage containing an electric heater, a kettle body and a base. The kettle body is placed on the base, the first electric connector being in connection with the electric heater and the second electric connector being in connection with the main power are set up between the kettle body and the base. On the bottom of the kettle body there is an inner vessel provided with a funnel at its upper opening and the funnel contains two separate filtering layers: an upper filtering layer and a lower filtering layer; there is on that said inner vessel a cap covering the opening of the kettle body and having a pipe from the cavity of the inner vessel directly to the space between the said kettle body and the inner vessel.

Since there is a lid set up on the inner vessel and covering the opening of the kettle body, and said lid is equipped with a pipe from the cavity of the inner vessel to the space between the kettle body and the inner vessel, the boiling water in the inner vessel may go through the lower port of the funnel and fly out from the top port of the funnel, then enters through the pipe into the space between the kettle body and the inner vessel. On placing tea-leaf or coffee powder into the funnel, the user does not need to touch the top end of the funnel. Simply by holding the edge of the lid, the user can open it. It is of convenient procedure and avoids touching the funnel of high temperature, so that to prevent from any heat injury and sanitary problems of contamination due to any touch of the inside of the kettle body.

### Brief Description of the Drawings

The Description of the drawings is as follows:
- Fig. 1: is a structural diagram of a Kettle for Beverage in this Invention
- Fig. 2: is a structural diagram of an Electric Kettle for Beverage in this Invention.
- Fig. 3: is a structural diagram of a Cableless Electric Kettle for Beverage in this Invention.
- Fig. 4: is a structural diagram of the lid in Fig. 1, Fig. 2 and Fig. 3.
- Fig. 5: is a section view of line A-A in Fig. 4.
- Fig. 6: is a 3-D structural diagram of the lid in Fig. 1-5.
A further detailed description of the example of embodiments, combined with drawings, is made for this Invention as follows.

### Detailed Description of the Preferred Embodiments

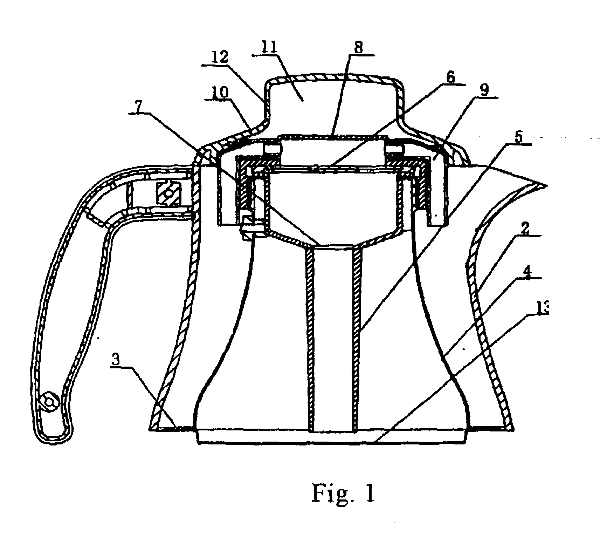

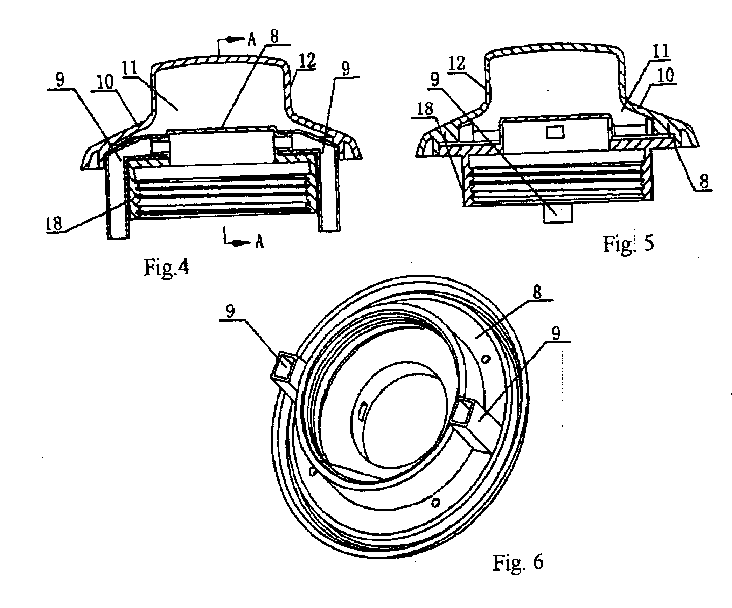

As shown in Fig. 1, Fig. 4, Fig. 5 and Fig. 6, the Kettle for Beverage in this Invention contains a Kettle Body 2, a Bottom 3 of the Kettle Body, an Inner Vessel 4, a Funnel 5, an Upper Filtering Layer 6, a Lower Filtering Layer 7, a Cap 8, a Pipe 9, an Isolation Cavity 11, a Surface Layer 10, a Lid Handle 12 and a Bottom 13 of the Inner Vessel.

The Kettle Body 2 may be made of metal, such as stainless steel, as well as of plastic material. The Bottom 3 of the Kettle Body is made of metal possible to be heated on a heat source such as stoves. The Plastic Kettle Body is easy to be formed to the required shape. The said Cap 8 has a surface possible to cover the top opening of the Kettle Body 2, and the surface is provided with an Annular Edge 18, extending downwards and possible to slip on the upper opening of the Inner Vessel 4. A thread is provided on both the Annular Edge 18 and the Inner Vessel 4 for their connection so that rotating the Cap 8 may fix and connect it onto the upper port of the Inner Vessel 4. Said Pipe 9 is a bended pipe in shape of an L and has its one end connected with the side wall of the concave cavity 19 inside of Cap 8, the other end extends downwards into the cavity of the Kettle Body 2. Said Cap 8 is provided with a Surface Layer 10 covering on the Pipe 9 in such a manner as to form an Isolation Cavity 11 together with this Pipe 9. Since there is water and vapor flowing through the Pipe 9 during its working, the surface of the Pipe would be in high temperature, this Isolation Cavity 11 would isolate the heat and the temperature on the Surface Layer 10 would be significantly lower so that no part of the Surface Layer 10 would cause a heat injury in case the user accidentally touches it. The Surface Layer 10 is provided with a Lid Handle 12 on it to facilitate to hold the Cap 8. The Inner Vessel 4 may be made of metal or metal + Plastics. The Bottom 13 of the Inner Vessel must be made of metal so it can be heated while the Inner Vessel 4 may be made of plastics as well as metal. The Coincident part of such Bottom 13 of the Inner Vessel and the Kettle Bottom 3 of the Kettle Body 2 extends downwards and forms a depressed surface so that it can be heated concentratively by the heat source, and their not coincident part extends upwards and should be away from the heat source as far as possible. This will help to enhance the heating efficiency as well as to reduce the surface temperature of the Kettle Body 2 because it is not heated directly. Such a Bottom 13 of the Inner Vessel is of metal plate with magnetic conductivity. If an iron plate is used, the Kettle for Beverage may be heated on electromagnetic stoves as well as on ordinary stoves. This is convenient for its use.

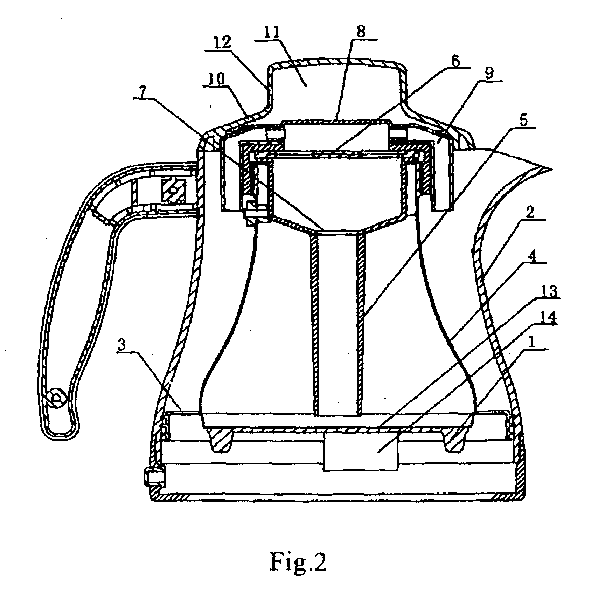

As shown in Fig. 2, Fig. 4, Fig. 5 and Fig. 6, the invention concerns as well electric Kettles for Beverage containing an Electric Heater 1, a Kettle Body 2, a Bottom 3 of the Kettle Body, an Inner Vessel 4, a Funnel 5, an Upper Filtering Layer 6, a Lower Filtering Layer 7, a Cap 8, a Pipe 9, a Surface Layer 10, an Isolation Cavity 11, a Lid Handle 12, a Bottom 13 of the Inner Vessel and a Temperature Controller 14 for the dry boiling protection.

The Structures and relative relation in location for such a Kettle Body 2, a Bottom 3 of the Kettle Body, an Inner Vessel 4, a Funnel 5, an Upper Filtering Layer 6, a Lower Filtering Layer 7, a Cap 8 and a Pipe 9 are the same as in the above-mentioned Kettle for Beverage.

The Electric Heater 1 is set up on the Bottom 13 of the Inner Vessel in the Inner Vessel 4. When the Electric Heater 1 is powered, its generated heat can be focused on the Bottom 13 of the Inner Vessel. In case the water in the Inner Vessel 4 is boiling and exhausted, the temperature of the Bottom 13 of the Inner Vessel will be increased because of a lack of water, but the entire Kettle Body would not be damaged due to overheating, because the water still exists in part of outer edge of the Bottom 3 of the Kettle Body. Only the temperature of the Inner Vessel 4 would be exceeding, but there is water around it.

The Temperature Controller 14 for the dry boiling protection is set on such a Bottom 13 of the Inner Vessel. In the case the water in the Inner Vessel 4 is boiling and exhausted, the temperature of the Bottom 13 of the Inner Vessel will be increased because of a lack of water, and the Temperature Controller 14 detects this increase in the temperature and operates to cut off the power supply to the Electric Heater 1. When the water in the Inner Vessel 4 is still not exhausted, the temperature of the Inner Vessel 4 is generally not higher than 100 °C, and after the water in it is exhausted, its temperature would exceed 100 °C. It is necessary to select the temperature controller with an appropriate operating temperature as the Temperature Controller 14 for dry boiling protection.

The coincident part of such Bottom 13 of the Inner Vessel and the Kettle Bottom 3 of the Kettle Body 2 extends downwards and forms a depressed surface. The Temperature Controller 14 for the dry boiling protection is set on such a depressed surface. It enables heat generated by the Electric Heater 1 to be focused on the Bottom 13 of the Inner Vessel and reduces the heat emitted to the peripheral part of the Bottom 3 of the Kettle Body, and also keeps the Kettle Body 2 in a lower temperature. In case the water in the Inner Vessel 4 is exhausted, the Temperature Controller 14 detects this directly and accordingly takes its operation quickly.

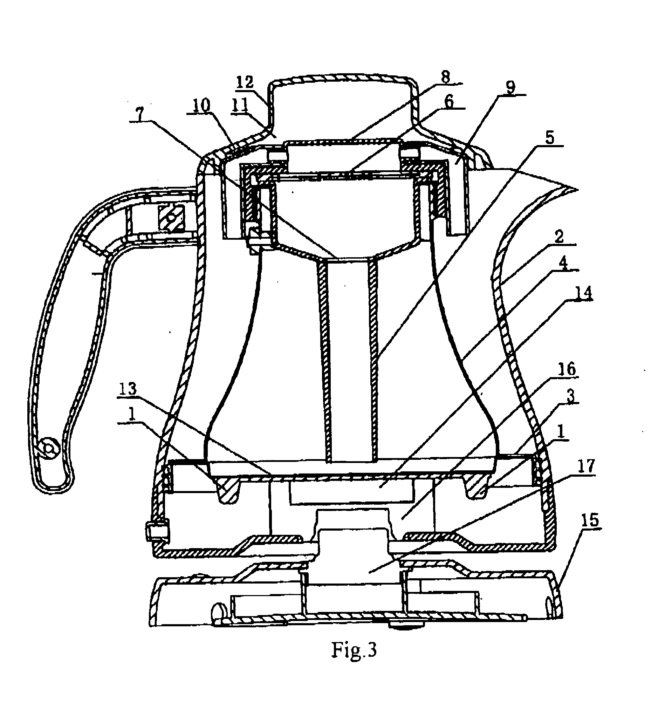

As shown in Fig. 3, Fig. 4, Fig. 5 and Fig. 6, the invention concerns as well Cableless Electric Kettles for Beverage containing an Electric Heater 1, a Kettle Body 2, a Bottom 3 of the Kettle Body, an Inner Vessel 4, a Funnel 5, an Upper Filtering Layer 6, a Lower Filtering Layer 7, a Cap 8, a Pipe 9, a Surface Layer 10, an Isolation Cavity 11, a Lid Handle 12, a Bottom 13 of the Inner Vessel, a Temperature Controller 14 for the dry boiling protection, a Base 15, a First Electric Connector 16 and a Second Electric Connector 17.

Compared with the Electric Kettle for Beverage in Fig. 2, the Cableless Electric Kettle for Beverage in this Invention is basically the same with exception for adding a Base 15, a First Electric Connector 16 and a Second Electric Connector 17. On its use, it is simply to place the Kettle Body 2 on the Base 15, and make the First Electric Connector 16 and the Second Electric Connector 17 connected together. The Electric Heater 1 is powered and generates heat. Once the Kettle Body 2 is separate from the Base 15, the Electric Heater 1 would be disconnected from the power supply and no heat is generated.

From above-mentioned, it may be seen that this Invention, by the structural design of the lid and an improvement of the structure on the Bottom of the Kettle Body and the Bottom of the Inner Vessel, reduces the temperature of the lid to facilitate its opening and reduces the liquid stain on the inner surface of the lid to facilitate cleaning and washing. It also prevents the water and vapor from flying out from the opening of the Kettle Body and is easy to use.

## Claims

1. A kettle for Beverage, comprising a Kettle Body (2), an Inner Vessel (4) being on the Bottom of the Kettle Body (3) and leaving a space (20) to the wall of the Kettle Body (2), provided with a Funnel (5) at the upper opening of the Inner Vessel and two separate filtering layers, namely an Upper Filtering Layer (6) and a Lower Filtering Layer (7), being set up in the Funnel (5),
**characterized by**
a Cap (8) being on the Inner Vessel (4) and covering as well the top opening of the Kettle Body (2),
and
that said Cap (8) is having a Pipe (9) leading from the cavity of the Inner Vessel (4) directly to the space (20) between the Kettle Body (2) and the Inner Vessel (4), capable to lead the vaporized liquids from the cavity of the Inner Vessel (4) directly into the space (20) between the Kettle Body (2) and the Inner Vessel (4) and
that said Cap (8) is provided with a Surface Layer (10) covering said Pipe (9) and forming an Isolation Cavity (11) together with the Pipe (9).

2. A kettle for Beverage as claimed in Claim 1, **characterized by** that said Cap (8) is provided with an Annular Edge (18) extending downwards and able to slip on the upper opening of the Inner Vessel (4);
the thread is provided on that said Annular Edge (18) and on the Inner Vessel (4) for their connection.

3. A kettle for Beverage as claimed in Claim 1 or 2, **characterized by** that said Surface Layer (10) is equipped with a Lid Handle (12).

4. A kettle for Beverage as claimed in Claim 1, 2 or 3 **characterized by** that the coincident part of the Bottom of the Inner Vessel (13) and the Bottom of the Kettle Body (3) extend downwards and form a depressed surface.

5. A kettle for Beverage as claimed in one or more of the above mentioned Claims, **characterized by** that said Bottom of the Inner Vessel (13) is of metal plate with magnetic conductivity.

6. A kettle for Beverage as claimed in Claim 1, 2 or 3,**characterized by** comprising an Electric Heater (1) in the Kettle Body (2) which is set up on the Bottom of the Inner Vessel (13) and provided with a Temperature Controller (14) for dry boiling protection being set up on the Bottom of the Inner Vessel (13).

7. A kettle for Beverage as claimed in Claim 6, **characterized by** that the coincident part of the Bottom of the Inner Vessel (13) and the Bottom of the Kettle Body (3) extends downwards and forms a depressed surface.

8. A kettle for Beverage as claimed in Claim 7, **characterized by** a Temperature Controller (14) for dry boiling protection being set up on that said depressed surface.

9. A kettle for Beverage as claimed in Claim 6, 7 or 8, **characterized by** comprising a cableless Kettle Body (2) being placed on a Base (15);
with a First Electric Connector (16) for the connection with the Electric Heater (1) and a Second Electric Connector (17) for the connection with the main power being set up between the Kettle Body (2) and the Base (15).

## Patentansprüche

1. Ein Kessel für Getränke, bestehend aus einem Kesselgehäuse (2), einem Innengefäß (4), das sich am Kesselgehäuseboden (3) befindet, und einen Raum (20) zur Wand des Kesselgehäuses (2) hin frei lässt, ausgestattet mit einem Trichter (5) an der oberen Öffnung des Innengefäßes und zwei im Trichter (5) angeordneten getrennten Filterschichten, nämlich einer Oberen Filterschicht (6) und einer Unteren Filterschicht (7),
**dadurch gekennzeichnet,**
**dass** am Innengefäß (4) eine Kappe (8) vorhanden ist, die auch die obere Öffnung des Kesselgehäuses (2) abdeckt,
und
**dass** diese Kappe (8) ein Rohr (9) aufweist, das aus dem Hohlraum des Innengefäßes (4) direkt zu dem Raum (20) zwischen dem Kesselgehäuse (2) und dem Innengefäß (4) führt und in der Lage ist, die verdampften Flüssigkeiten aus dem Hohlraum des Innengefäßes (4) direkt in den Raum (20) zwischen dem Kesselgehäuse (2) und dem Innengefäß (4) zu leiten,
und
**dass** die Kappe (8) mit einer Oberflächenschicht (10) versehen ist, die das Rohr (9) bedeckt und zusammen mit dem Rohr (9) einen Isolationsraum (11) bildet.

2. Ein Kessel für Getränke gemäß Anspruch 1, **dadurch gekennzeichnet, dass** die Kappe (8) mit einem Ringförmigen Rand (18) versehen ist, der sich nach unten erstreckt und über die obere Öffnung des Innengefäßes (4) gleiten kann;
an dem Ringförmigen Rand (18) und dem Innengefäß (4) ist zu ihrer Verbindung ein Gewinde vorgesehen.

3. Ein Kessel für Getränke gemäß Anspruch 1 oder 2, **dadurch gekennzeichnet, dass** die Oberflächenschicht (10) mit einem Deckelgriff (12) ausgestattet ist.

4. Ein Kessel für Getränke gemäß Anspruch 1, 2 oder 3, **dadurch gekennzeichnet, dass** der übereinstimmende Teil des Bodens (13) des Innengefäßes und des Bodens (3) des Kesselgehäuses sich nach unten erstrecken und eine vertiefte Fläche bilden.

5. Ein Kessel für Getränke gemäß einem oder mehreren der vorstehenden Ansprüche, **dadurch gekennzeichnet, dass** der Boden (13) des Innengefäßes aus Blech mit magnetischer Leitfähigkeit besteht.

6. Ein Kessel für Getränke gemäß Anspruch 1, 2 oder 3, **dadurch gekennzeichnet, dass** er ein Elektroheizgerät (1) im Kesselgehäuse (2) aufweist, das am Boden (13) des Innengefäßes angeordnet und mit einem Temperaturregler (14) zum Schutz gegen Verkochen ausgestattet ist, der am Boden (13) des Innengefäßes angeordnet ist.

7. Ein Kessel für Getränke gemäß Anspruch 6, **dadurch gekennzeichnet, dass** der übereinstimmende Teil des Bodens (13) des Innengefäßes und des Bodens (3) des Kesselgehäuses sich nach unten erstreckt und eine vertiefte Fläche bildet.

8. Ein Kessel für Getränke gemäß Anspruch 7, **gekennzeichnet durch** einen Temperaturregler (14) zum Schutz gegen Verkochen, der auf der erwähnten vertieften Fläche angeordnet ist.

9. Ein Kessel für Getränke gemäß Anspruch 6, 7 oder 8, **dadurch gekennzeichnet, dass** er ein kabelloses Kesselgehäuse (2) umfasst, das auf einem Sockel (15) angeordnet ist;
mit einem Ersten Elektrischen Verbinder (16) zum Anschluss an das Elektroheizgerät (1) und mit einem Zweiten Elektrischen Verbinder (17) zum Anschluss an das Stromnetz, angeordnet zwischen dem Kesselgehäuse (2) und dem Sockel (15).

## Revendications

1. Cuve pour boissons constituée d'un corps de cuve (2), d'un récipient intérieur (4) placé au fond du corps de cuve (3) et laissant un espace (20) libre jusqu'à la paroi du corps de cuve (2), comprenant un entonnoir (5) au niveau de l'ouverture supérieure du récipient intérieur et deux couches filtrantes séparées, à savoir une couche filtrante supérieure (6) et une couche filtrante inférieure (7) disposées dans l'entonnoir (5),
ladite cuve étant **caractérisée par le fait**
**qu'**un couvercle (8) recouvrant également l'ouverture supérieure du corps de cuve (2) se trouve sur le récipient intérieur (4),
et
**que** ledit couvercle (8) comporte un tuyau (9) conduisant directement de la cavité du récipient intérieur (4) à l'espace (20) compris entre le corps de cuve (2) et le récipient intérieur (4) et étant en mesure de conduire directement les liquides vaporisés depuis la cavité du récipient intérieur (4) dans l'espace (20) compris entre le corps de cuve (2) et le récipient intérieur (4),
et
**que** ledit couvercle (8) est doté d'une couche superficielle (10) qui recouvre le tuyau (9) et forme avec ce tuyau (9) une cavité d'isolation (11).

2. Cuve pour boissons selon revendication 1, ladite cuve étant **caractérisée par le fait que** le couvercle (8) est doté d'une bordure annulaire (18) qui s'étend vers le bas et peut glisser sur l'ouverture supérieure du récipient intérieur (4) :
un filetage est prévu sur la bordure annulaire (18) et le récipient intérieur (4) pour les raccorder.

3. Cuve pour boissons selon revendication 1 ou 2, ladite cuve étant **caractérisée par le fait que** la couche superficielle (10) est équipée d'une poignée de couvercle (12).

4. Cuve pour boissons selon revendication 1, 2 ou 3, ladite cuve étant **caractérisée par** le fait la partie coïncidente du fond (13) du récipient intérieur et du fond (3) du corps de cuve s'étend vers le bas et forme une surface en creux.

5. Cuve pour boissons selon une ou plusieurs des revendications susmentionnées, ladite cuve étant **caractérisée par le fait que** le fond (13) du récipient intérieur est en tôle à conductivité magnétique.

6. Cuve pour boissons selon revendication 1, 2 ou 3, ladite cuve étant **caractérisée par le fait qu'**elle comprend un radiateur électrique (1) dans le corps de cuve (2) placé sur le fond (13) du récipient intérieur et équipé d'un régulateur de température (14) pour protéger contre la cuisson qui est placé au fond (13) du récipient intérieur.

7. Cuve pour boissons selon revendication 6, ladite cuve étant **caractérisée par le fait que** la partie coïncidente du fond (13) du récipient intérieur et du fond (3) du corps de cuve s'étend vers le bas et forme une surface en creux.

8. Cuve pour boissons selon revendication 7, ladite cuve étant **caractérisée par** un régulateur de température (14) pour protéger contre la cuisson placé sur ladite surface en creux.

9. Cuve pour boissons selon revendication 6, 7 ou 8, ladite cuve étant **caractérisée par le fait qu'**elle comprend un corps de cuve (2) sans câble placé sur un socle (15) ;
avec un premier connecteur électrique (16) pour la connexion au radiateur électrique (1) et un deuxième connecteur électrique (17) pour la connexion au réseau, placés entre le corps de cuve (2) et le socle (15).
